# EUROPEAN PATENT APPLICATION

(11) **EP 3 587 361 A1**
(43) Date of publication of application: **01.01.2020**
(21) Application number: 19000304.6
(22) Date of filing: 25.06.2019
(51) Int. Cl.: C02F 3/08, C02F 3/10, C02F 3/20

(54) **WASTE SUSPENSION TREATMENT APPARATUS**

(30) Priority: 27.06.2018 GB 201810551
(71) Applicant: Marsh Boyer, Stephen, Irthlingborough, Northamptonshire NN9 5PJ (GB)
(72) Inventor: Marsh Boyer, Stephen, Irthlingborough, Northamptonshire NN9 5PJ (GB)
(74) Representative: Franks & Co (South) Limited

(57) **Abstract**

A waste suspension treatment apparatus (1) comprises a primary waste chamber (3) provided with a waste inlet pipe (2) and a first filter (7); a waste treatment chamber (8) provided with treatment media (28) and a second filter (9); and a final waste chamber (12) provided with a waste efflux pipe (17). The primary waste chamber (3), waste treatment chamber (8) and final waste chamber (12) are arranged in series. The first filter (7) is located within the primary waste chamber and separates macroscopic waste products before transfer to the waste treatment chamber (8). The second filter (9) is adapted for removal of fine suspended solids from a treated waste suspension before transition to the final waste chamber (12). The apparatus (1) provides a scale-able, transportable and re-usable waste suspension treatment unit, capable of providing a final waste solution with reduced Biological Oxygen Demand (BOD), ammoniacal nitrogen and suspended solid levels than those expected by the Environment Agency.

## Description

### Field of the Invention

The present invention relates to a scaled and refined portable waste suspension treatment apparatus. More particularly, it relates to a waste suspension treatment apparatus, capable of conforming to Environment Agency standards for raw sewage treatment, whose design is such that it may be readily transported, used and re-used.

### Background of the Invention

Raw sewage is highly pollutive and therefore, prior to being discharged into the environment, must be treated so as to conform with standards set by the Environment Agency in the UK and equivalent bodies elsewhere, facilitating efflux of an environmentally safe solution. In this regard, there are three key pollutive components to raw sewage which in particular must be addressed prior to efflux; Biological Oxygen Demand (BOD) level, ammoniacal nitrogen and suspended solids.

The BOD level of a solution represents the amount of oxygen required by microorganisms to break down the organic matter within. Raw sewage has a high BOD level, typically in the range of 300-400mg/L. Therefore, if raw sewage, or any solution with a high BOD level, were to be discharged into a water course, it would be highly pollutive as a result of severe depletion of the oxygen within the water, thus killing aquatic life. The standard set by the Environment Agency for the efflux of treated sewage into a watercourse is a BOD level of less than 20mg/L.

Ammoniacal nitrogen is the level of nitrogen within the sewage in the form of ammonia (NH₃). Nitrogen is a key nutrient for plant growth and therefore, introduction of solutions with a particularly high level of nitrogen to a watercourse may result in aggressive plant growth and algae development. This process is known as Eutrophication, and again, results in severe depletion of oxygen levels within the water course as a result of the decomposition of excess plant matter. Raw sewage has a particularly high level of ammonia, typically around 45mg/L, mostly stemming from urine content. The standard set by the Environment Agency for the efflux of treated sewage is an ammonia level of less than 20mg/L.

Suspended solids range in particle size, but importantly do not have a set dimension range as such. They are normally determined as being small enough to be capable of suspension within the "sewage liquor" and large enough to be collected by a filter (of which there are different grades). Suspended solid levels for raw sewage typically range between 250-350 mg/L. The standard set by the Environment Agency for the efflux of treated sewage is a total suspended solid level of less than 30mg/L, usually achieved through settlement treatment and biological treatment.

Where there is a relatively consistent level of raw sewage being processed, it is routine to establish the size of the treatment plant required so as to conform to the standards set by the Environment Agency. However, in industries where there is a requirement for local sewage treatment, and where there is a particularly high fluctuation in raw sewage input, such as the recreational sector, it is difficult to ascertain the appropriate size of the treatment plant required. A particular example is that of a camp site, with a maximum capacity of 200 caravans on site and a typical average of 30 caravans on site. Based on 4 people per caravan, there is a potential difference of 680 people at any given time point. This large variation in occupancy in turn leads to largely irregular levels of sewage influx. This is of particular importance, given that if too large a treatment plant is employed, there is insufficient sewage influx for the treatment plant to function and so the treatment plant becomes septic. Conversely, if too small a treatment plan is employed, it will rapidly reach capacity and the person responsible for sewage treatment would be required to send the excess sewage elsewhere for treatment, otherwise, they would be polluting the environment.

### Summary of the Invention

It is hence an object of the present invention to address the above shortfalls in the practicality of existing raw sewage treatment plants. Specifically, it is an object to provide a novel, scaled and portable adaptation of a sewage treatment plant, to reduce BOD, ammonia and suspended solid levels of raw sewage into conformity with Environment Agency (or equivalent) standards. Most particularly, it is an object to provide said novel, scaled and portable waste suspension treatment apparatus so as to service the need for variable sewage treatment requirements.

According to a first aspect of the present invention, there is provided a waste suspension treatment apparatus, comprising; a primary waste chamber, provided with at least one waste suspension inlet means, configured for receiving a waste suspension; a first filter means, located within the primary waste chamber, for separation of macroscopic waste products from said waste suspension within said primary waste chamber, to produce a filtered waste suspension; a waste treatment chamber, having first and second ends, containing at least one treatment medium for the treatment of said filtered waste suspension, to produce a treated waste suspension; a second filter means, adapted for removal of suspended solids from said treated waste suspension, to produce a final waste suspension; at least one final waste suspension outlet means, for removal of said final waste suspension from the waste suspension treatment apparatus; and a pump means, for the removal of said final waste suspension by way of said final waste suspension outlet means; wherein: a waste suspension is received into the primary waste chamber through the waste suspension inlet means, is passed through the first filter means to form a filtered waste suspension, said filtered waste suspension is passed into the waste treatment chamber, where the treatment medium acts on the filtered waste suspension to reduce BOD, ammonia and total suspended solid levels to form the treated waste suspension, said treated waste suspension is passed through the second filter means to reduce total suspended solids further, yielding a final waste suspension, which is passed out of the apparatus via the outlet.

Preferably, the primary waste chamber is provided with a plurality of waste suspension inlet means.

Preferably, at least one of the plurality of waste suspension inlet means is selectably and reversibly sealable.

Most preferably, at least one of the plurality of waste suspension inlet means is selectably and reversibly connectable to a primary extension chamber.

Preferably, the primary extension chamber is provided with extension chamber waste suspension inlet means, for influx of said waste suspension into said primary extension chamber.

Preferably, the apparatus further comprises at least one air incorporation means, for the incorporation of air into said waste suspension.

Preferably, the air incorporation means is situated within the waste treatment chamber.

Advantageously, the air incorporation means comprises a diffuser connected to an air compressor.

Preferably, the diffuser is elongate, comprising a first end and a second end, and extends an entire length of said waste treatment chamber.

Preferably, the first end of the diffuser is situated adjacent the first end of the waste treatment chamber and the second end of the diffuser is situated adjacent the second end of the waste treatment chamber.

Preferably, the second end of the diffuser is configured for connection to a pipe, which is in turn configured for connection to the compressor.

Most preferably, the apparatus comprises a plurality of air incorporation means, situated within the waste treatment chamber and generally equally transversely spaced.

Preferably, the apparatus further comprises a first baffle means and a second baffle means, wherein the first baffle means is situated between the primary waste chamber and the waste treatment chamber, and the second baffle means is situated between the waste treatment chamber and a final waste chamber.

Preferably, the first baffle means defines a first boundary between the primary waste chamber and the waste treatment chamber.

Preferably, the second baffle means defines a second boundary between the waste treatment chamber and the final waste chamber.

Advantageously, the apparatus further comprises waste circulation means, for the return of a sedimented waste suspension from the final waste chamber to the primary waste chamber for further processing.

Advantageously, the waste circulation means extends an entire length of said waste suspension treatment apparatus and comprises a waste circulation inlet means and a waste circulation outlet means.

Most advantageously, the waste circulation inlet means is situated within the final waste chamber, adjacent the second baffle means, and the waste circulation outlet means is situated within the primary waste chamber, adjacent the first baffle means.

Preferably, the apparatus is further provided with a pump means.

Preferably, the treatment medium comprises a grooved or apertured surface for greater surface area per unit.

Advantageously, the treatment medium has a surface area of 239m²/m³ - 859m²/m³.

Most preferably, the apparatus comprises a plurality of separate treatment media.

Advantageously, the treatment media comprise a plastics material, such as High Density Polyethylene (HDPE).

Most advantageously, the treatment media facilitate bacterial growth.

According to a second aspect of the present invention, there is provided a waste suspension treatment process comprising the steps of: providing waste suspension treatment apparatus as claimed in any one of the preceding claims; receiving a waste suspension; first filtration of said waste suspension, producing a filtered waste suspension; biological treatment of said filtered waste suspension, producing a treated waste suspension; second filtration of said treated waste suspension, producing a final waste suspension; and ejecting said final waste suspension from the apparatus.

### Brief Description of the Drawings

For a better understanding of the present invention and to show how the same may be carried into effect, there will now be described by way of example, specific embodiments according to the present invention, with reference to the accompanying drawings, in which:
**Figure 1** is a semi-transparent side elevation of a first embodiment of a waste suspension treatment apparatus;
**Figure 2** is a semi-transparent plan view from above of the waste suspension treatment apparatus shown in Figure 1;
**Figure 3a** is a cross-sectional elevation of the waste suspension treatment apparatus shown in Figure 2, taken along line A-A;
**Figure 3b** is a cross-sectional elevation of the waste suspension treatment apparatus shown in Figure 2, taken along line B-B;
**Figure 3C** is a cross-sectional elevation of the waste suspension treatment apparatus shown in Figure 2, taken along line C-C;
**Figure 4** is a plan view from above of the waste suspension treatment apparatus shown in Figure 1, with the top removed;

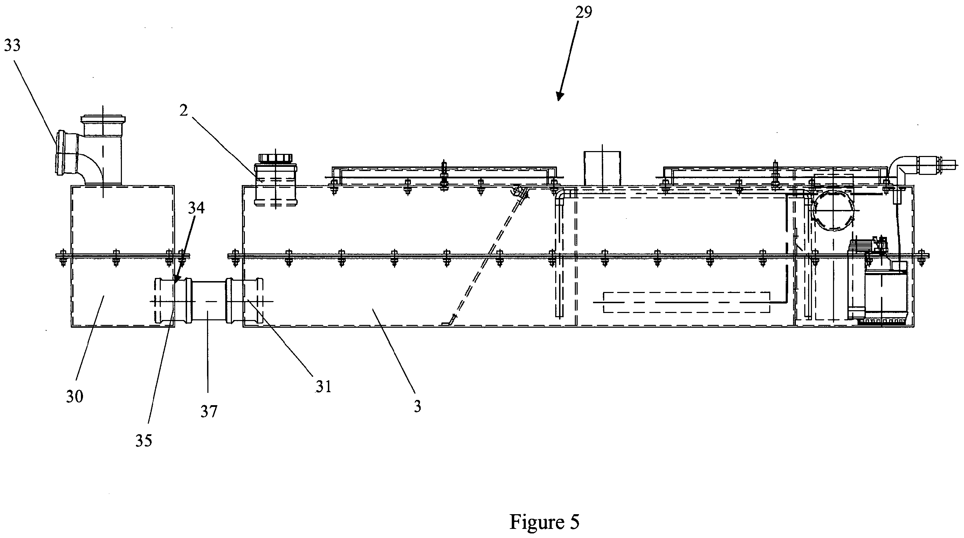

**Figure 5** is a semi-transparent side elevation of a second embodiment of the waste suspension treatment apparatus; and
**Figure 6** is a semi-transparent plan view from above the waste suspension treatment apparatus shown in Figure 5.

### Detailed Description of the Embodiments

### Figure 1

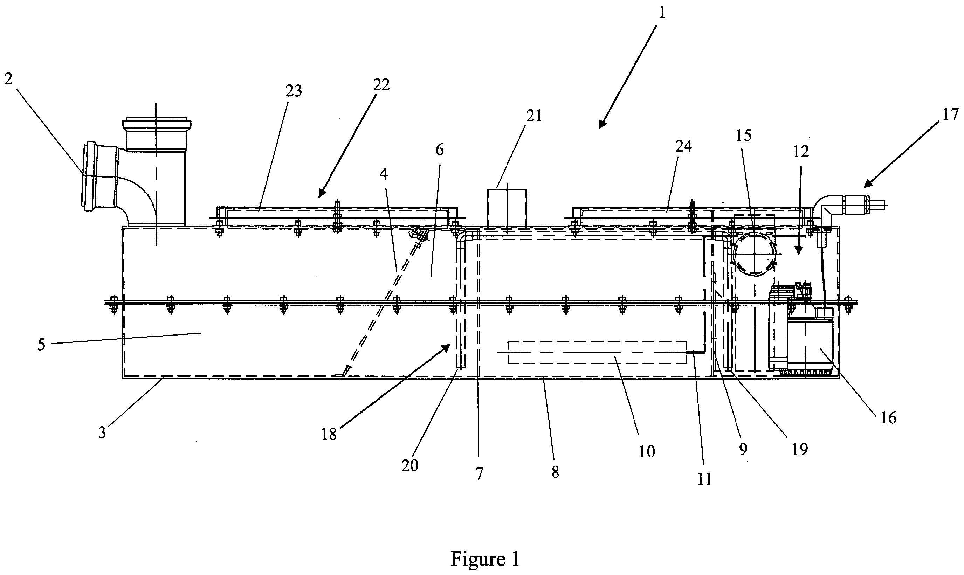

Referring now to the Figures, and to Figure 1 in particular, a first embodiment of the present invention, a first waste suspension treatment apparatus (indicated generally at 1), comprising at least one waste suspension inlet 2 in fluid communication with a primary waste chamber 3. Waste suspension inlet 2 is a typical waste inlet, such as a pipe, and facilitates the influx of a waste suspension into the primary waste chamber 3. The waste suspension inlet 2 is selectable so as to fit to a typical commercial waste outlet, such as those found in caravans.

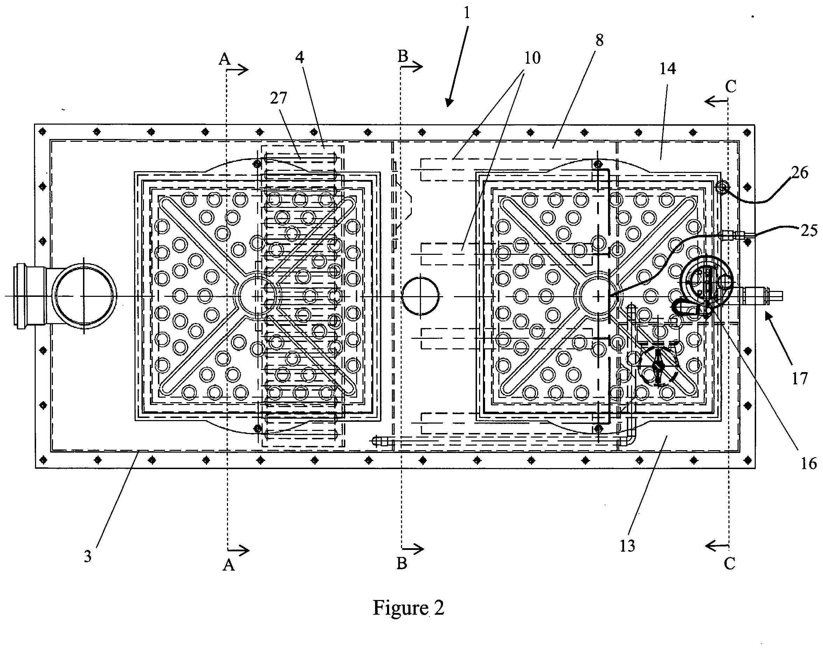

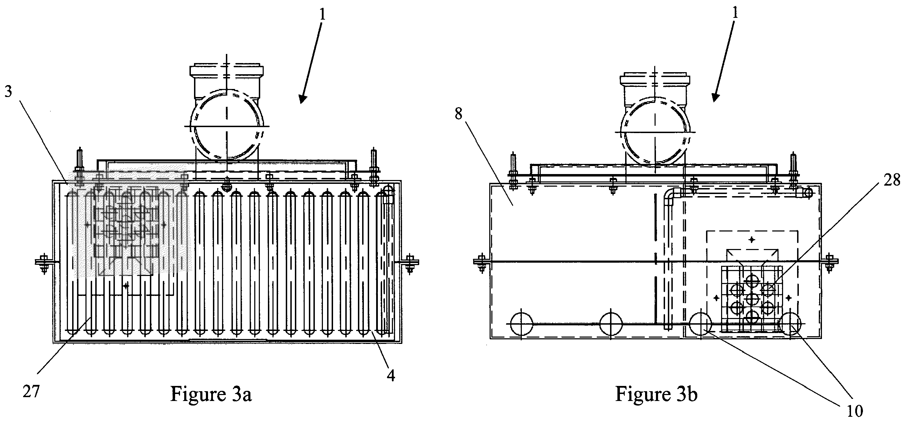

The primary waste chamber 3 comprises a first filter 4 whose apertures are dimensioned to allow throughflow of a waste suspension, whilst separating macroscopic waste products from said suspension. Such macroscopic waste products include disposable wipes, sanitary towels, cotton buds etc. In this specific embodiment, the first filter 4 defines elongate narrow apertures (referenced 25 in Figures 2 & 3a), extending from adjacent a lower end of said first filter 4 to adjacent an upper end of said first filter 4. Said first filter 4 is disposed at an angle within the primary waste chamber 3 and is situated remotely from the waste suspension inlet 2 of said primary waste chamber 3. The first filter 4 is therefore configured so as to afford effective filtration of macroscopic waste products from the waste suspension within a first area 5 of the primary waste chamber 3 as it passes into a second area 6 of said chamber 3. The first filter 4 therefore separates the first area 5 of the primary waste chamber 3, containing a waste suspension (typically raw sewage), and a second area 6 of said primary waste chamber 3, containing a filtered waste suspension. The first filter 4 also assists in the reduction in particle size of degradable solids within the waste suspension, such as larger fecal matter, by passing of said matter therethrough. Therefore, the first filter 4 aids the later processing of said waste suspension by providing a greater surface area to be degraded.

The filtered waste suspension then progresses through the second area 6 of the primary waste chamber 3 and passes along a first baffle 7. Said first baffle 7 enables unidirectional flow of said filtered waste suspension into a waste treatment chamber 8. The first baffle 7 therefore defines a boundary between the primary waste chamber 3 and the waste treatment chamber 8. The first baffle 7 is of a typical baffle construction utilised within commercial waste management. Furthermore, the first baffle 7 assists in the breakdown and aeration of the filtered waste suspension, aiding in the subsequent lowering of total suspended solid and BOD levels of said waste suspension.

The waste treatment chamber 8 has a first end adjacent the first baffle 7 and a second end, remote from the first, and adjacent a second baffle 9.

The waste treatment chamber 8 comprises at least one diffuser 10. Here, the waste treatment chamber 8 comprises a plurality of diffusers 10. Each diffuser 10 comprises substantially cylindrical elongate structures, with first and second ends, and define a plurality of apertures in its upper surface. Said diffusers 10 extend along a length of said waste treatment chamber, with the first ends of the diffusers 10 situated adjacent the first baffle 7 and the second ends of the diffusers 10 situated adjacent the second baffle 9. Furthermore, the diffusers 10 are situated adjacent the base of the waste treatment chamber 8 so as to allow incorporation of oxygen into the filtered waste suspension contained within from the bottom upwards, facilitating maximum lowering of the BOD level.

Each diffuser 10 is connected at their second end to a pipe 11, with said pipe then extending away from the diffuser 10 to an air inlet connector (referenced in Figure 2). The air inlet connector facilitates the progression of air from a compressor through each pipe 11 to each diffuser 10. The diffusers 10 therefore facilitate the incorporation of oxygen into the filtered waste suspension contained within the waste treatment chamber 8. In doing so, the diffusers 10 reduce the BOD level of the filtered waste suspension by promoting bacterial growth conditions within said waste treatment chamber 8. The growth of bacteria within said waste treatment chamber facilitates digestion of the filtered waste suspension and in turn reduction of BOD, total suspended solids and ammonia levels to give a treated waste suspension.

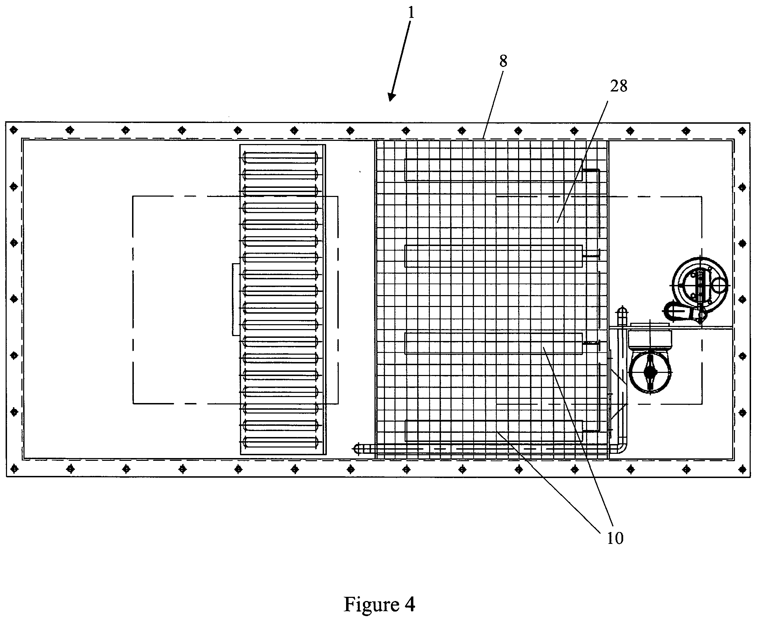

The waste treatment chamber 8 further comprises a treatment medium (referenced in Figures 3b & 4). Preferentially, the waste treatment chamber 8 comprises treatment media, occupying a given volume of said waste treatment chamber 8. More particularly, in the present embodiment, the treatment chamber 8 comprises hundreds to thousands of individual pieces of treatment media. Said treatment media occupies the majority of the volume of the waste treatment chamber 8, whilst preserving sufficient chamber volume for circulation of said media. The circulation of said media within the treatment chamber 8 helps to burst oxygen bubbles projected by the diffusers 10 so as to incorporate maximum levels of oxygen within the filtered waste suspension.

The treatment media comprises a grooved or aperture surface so as to provide a structure with a high surface area (dependent upon grade, but typically between 239m²/m³ - 859m²/m³). The high surface area of the media facilitates enhanced bacterial growth which in turn leads to greater levels of digestion of the filtered waste suspension within the waste treatment chamber 8. Therefore, through the diffusers 10 and the treatment media, the waste treatment chamber 8 facilitates optimised bacterial interaction with the filtered waste suspension, lowering BOD, total suspended solid and ammonia levels towards conformity with Environment Agency (or equivalent body) standards, and thus producing a treated waste suspension.

The treated waste suspension then progresses out of the waste treatment chamber 8 by way of the second baffle 9 into a final waste chamber (indicated generally at 12). Said second baffle 9 is of substantially similar construction to that of the first baffle 7. The second baffle 9 facilitates largely unidirectional flow of the treated waste suspension therethrough into the final waste chamber 12. The second baffle 9 therefore defines a second boundary between the the waste treatment chamber 8 and the final waste chamber 12. Furthermore, the second baffle 9 further assists in the breakdown and aeration of the treated waste suspension, aiding in the further lowering of total suspended solid and BOD levels of said treated waste suspension prior to efflux.

The final waste chamber 12 is partitioned into first 13 and second 14 portions (from left to right with respect to the final end of the apparatus, and represented more clearly in Figure 2). The treated waste suspension may only traverse from the first portion 13 to the second portion 14 of the final waste chamber 12 by way of a second filter 15. Said second filter 15 is therefore located within the first portion 13 of the final waste chamber 12 and passes through the partition, facilitating fluid communication with the second portion 14 of said chamber 12. Said second filter 15 filters out the finer suspended solids within the treated waste suspension and produces a final waste suspension with a reduced total suspended solid level prior to efflux.

The final waste chamber 12 further comprises an efflux pump 16. Said efflux pump 16 is situated within the second portion 14 of said chamber 12 and forcefully removes the final waste suspension from the apparatus by way of a waste suspension outlet 17. Said efflux pump 16 creates a pressure gradient across the first 13 and second 14 portions of the final waste chamber 12 so as to pull the treated waste suspension through the second filter 15. The final waste suspension is then forcefully removed from the apparatus under pressure from the efflux pump 16 by way of the waste suspension outlet (indicated generally at 17)

The waste suspension outlet 17 is of a structure typical to that of a waste pipe for commercial waste management. The waste suspension outlet 17 is configured so as to enable adaption into a main waste outlet pipe, where said main waste outlet pipe receives a feed from other final waste sources and leads to an appropriate discharge point.

The waste suspension treatment apparatus 1 further comprises a waste circulation pipe (indicated generally at 18). Said waste circulation pipe 18 generally comprises a series of pipes, extending a length of the waste suspension treatment apparatus 1. More specifically, the waste circulation pipe 18 comprises a waste circulation inlet 19 and a waste circulation outlet 20. The waste circulation inlet 19 is situated adjacent the second baffle 9 within the first portion 13 of the final waste chamber 12, whilst the waste circulation outlet 20 is situated adjacent the first baffle 7 within the primary waste chamber 3. Said inlet 19 and outlet 20 generally comprise openings within the pipe structure. The waste circulation pipe 18 is adapted to receive a negative pressure gradient across its length, from right to left, so as to allow for recirculation of any sedimented waste from the treated waste suspension within the final waste chamber 12. More specifically, a pressure gradient is applied across the waste circulation pipe 18 by way of a capillary, said capillary branching off of the diffuser pipe 11 and bubbling oxygen to provide said negative pressure. The waste circulation pipe 18 therefore sucks up any sedimented waste within the final waste chamber 12 by way of the waste circulation inlet 19. The sedimented waste then travels along the length of the waste circulation pipe 18 and is ejected from the waste circulation outlet 20 within the primary waste chamber 3. In the present embodiment, the ejected sediment waste is deposited within the second area 6 of the primary waste chamber 3 as it is not necessary for said sediment waste to pass back through the first filter 4. The recirculated waste is then ready to be re-processed by the apparatus for further microbial treatment.

The waste suspension treatment apparatus 1 further comprises at least one air vent 21 for the expulsion of built up gasses within the apparatus 1. Said air vent 21 is situated adjacent a top surface of the apparatus 1. More specifically, said air vent 21 is situated adjacent a top surface of the waste treatment chamber 8, as this is reasonably the area of the apparatus 1 where pressure is most likely to build.

The waste suspension treatment apparatus 1 also comprises at least one access cover (indicated generally at 22). In the present embodiment, the apparatus 1 comprises a first access cover 23 and a second access cover 24. The access covers 22 of the apparatus 1 have a structure comparable to that of a typical access cover, which is releasably attached to the top surface of the apparatus 1. More particularly, the first access cover 21 is situated adjacent the top surface of the primary waste chamber 3, facilitating access to said chamber 3 to remove any buildup of macroscopic waste products within the first filter 4. The second access cover 24 is situated adjacent the top surface of the waste treatment chamber 8 and extends a given length of the apparatus 1 to also be situated adjacent the top surface of the final waste chamber 12. Said second access cover 24 therefore allows for easy maintenance of the components comprised within the waste treatment chamber 8 and the final waste chamber 12. It shall be understood that the present invention, through maintenance of the appropriate chambers, may be easily re-used and may also be temporarily stored out of use.

### Figure 2

Figure 2 is intended to assist in illustrating the general structure of the waste suspension treatment apparatus 1. The numbering is drawn from Figure 1 and continued accordingly.

The waste suspension treatment apparatus 1, comprising the air inlet connector 25 as discussed within Figure 1. Said air inlet connector 25 facilitating connection of a compressor to the pipe 11 of the diffuser 10. Therefore, the inlet connector provides a means of passing air along said pipe 11 through said apertures within the top surface of said diffuser 10 and into the filtered waste suspension contained within the waste treatment chamber 8. The process of which assists in bacterial development, and in turn, the digestion of the filtered waste within the waste treatment tank, thereby facilitating biomass production and subsequently lowering of BOD, total suspended solid and ammonia levels of the waste suspension. The air inlet connector 25 is situated adjacent a top surface of the apparatus 1 for easy access to a compressor.

The waste suspension treatment apparatus 1, further comprising an electrical input connector 26. Said electrical input connector 26 facilitates the connection of the apparatus 1 to a mains energy source to power the efflux pump 16 comprised within the final waste chamber 12.

The waste suspension treatment apparatus 1, comprising the first filter 4 as discussed within Figure 1, wherein the first filter 4 defines elongate narrow apertures 27. Said apertures 27 are dimensioned so as to separate macroscopic waste products from the waste suspension within the primary waste chamber 3 to give a filtered waste solution. Moreover, said apertures 27 allow for relatively free flow of said waste solution therethrough, thus, allow for quick transition of the waste suspension for accelerated treatment.

### Figure 3a

Figure 3a is intended to assist in illustrating the design and imparted functionality of the elongate narrow apertures 27 of the first filter 4 comprised within the primary waste treatment chamber 3 of the apparatus 1. The structure of said elongate narrow apertures 27 is clearly depicted in Figure 3a, again, evidencing the corresponding dimensions and shape for optimised filtration of macroscopic waste products from the waste solution, whilst allowing free flow of said waste solution through said first filter 4 towards the waste treatment chamber 8.

### Figure 3b

Figure 3b provides additional clarity to the structure comprised within the waste treatment chamber 8 of the apparatus 1. As previously discussed, there are a plurality of diffusers 10 within said waste treatment chamber 8. More particularly, said plurality of diffusers 10 are generally equally transversely spaced along a bottom surface of said waste treatment chamber, so as to give an even and through distribution of air from said diffusers 10 to the filtered waste suspension therein, from the bottom upwards.

As has been previously discussed, the waste treatment chamber 8 comprises a waste treatment medium 28. Most preferably, the waste treatment chamber 8 comprises a plurality of said medium 28 (media). Said waste treatment media 28 occupies a volume of the waste treatment chamber and provides a significant surface area for the development of bacteria and subsequent biomass production. In the present embodiment, the waste treatment chamber 8 has the majority of its volume occupied by said waste treatment media 28 so as to give optimal conditions for the treatment (lowering of BOD, total suspended solid and ammonia levels) of the filtered waste suspension therein.

### Figure 3c

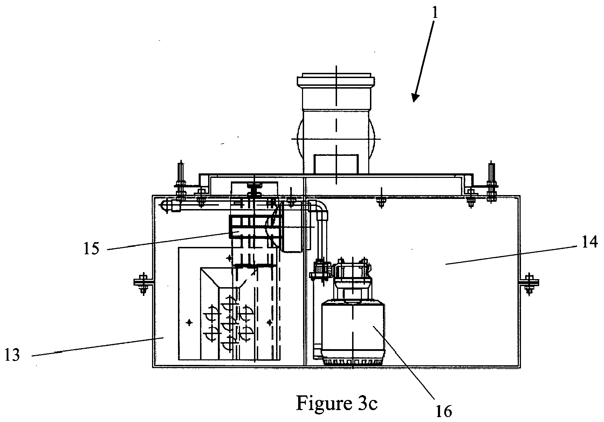

Figure 3c provides additional clarity to the components of the first apparatus 1, more particularly, to the components comprised within the final waste treatment chamber 12. As previously discussed, the final waste treatment chamber 12 comprises first 13 and second 14 portions, partitioned across the width of the chamber 12 and in fluid communication by way of the second filter 15. The treated waste suspension is passed out of the first portion 13 of the chamber 12 by way of the second filter 15 into the second portion 14. In passing the treated waste suspension through said second filter 15 the final waste suspension is produced. Said final waste suspension is then forcefully removed from the apparatus 1 through the waste suspension outlet 17 by way of the efflux pump 16.

### Figure 4

Figure 4 is also intended to assist in illustrating the design and structure of the contents of the waste treatment chamber 8 within the waste suspension treatment apparatus 1. More specifically, it clarifies the occupied volume of said waste treatment chamber 8 with the aforementioned waste treatment media 26.

It can be seen in Figure 4 that in the present embodiment, the majority of the waste treatment chamber 8 is occupied by the waste treatment media 28, spanning along the length from adjacent the first end of said waste treatment chamber 8 to the second end of said chamber 8, and adjacent its left wall to adjacent its right wall. In this regard, the waste treatment media 28 is further configured to be releasably attached within said waste treatment chamber 8 and sits above the diffusers 10. Alternatively, the waste treatment media 28 may not be attached, but also occupies a volume in between the diffusers 10 so as to fill the majority of free volume within said waste treatment chamber 8.

### Figure 5

A second embodiment of the present invention, a second waste suspension treatment apparatus 29, comprising all of the features of the first waste suspension treatment apparatus 1, in addition to the following.

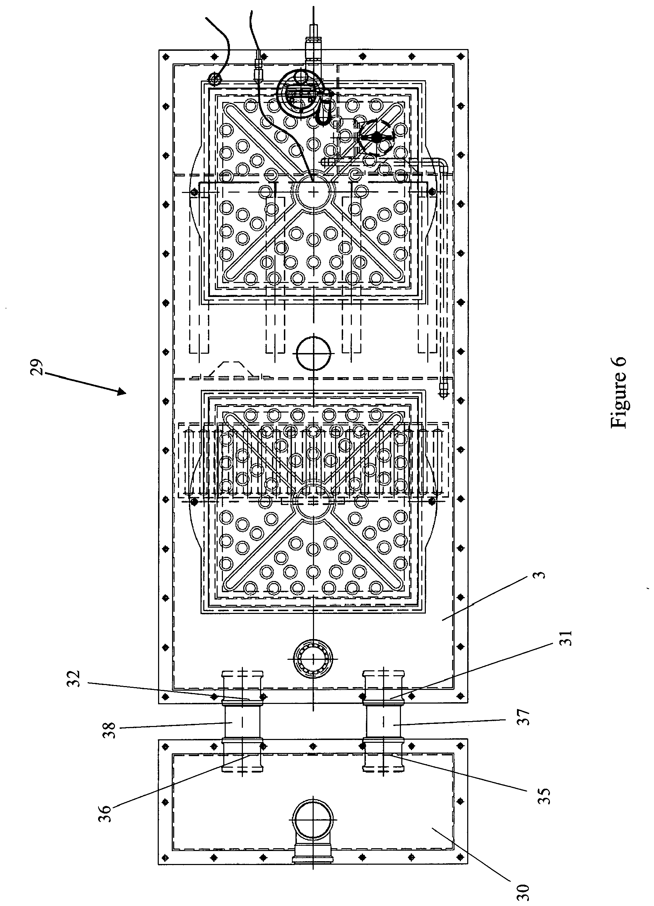

The second apparatus 29, comprising a primary extension chamber 30 for increased capacity of a waste suspension (typically raw sewage). Said second apparatus 29 is adapted for fluid communication with said primary extension chamber 30 in a number of ways. Firstly, the primary waste chamber 3 of the second apparatus comprises additional waste suspension inlets. More specifically, in the present embodiment, the primary waste chamber 3 comprises a second 31 and a third 32 waste suspension inlet. Said second 31 and third 32 waste suspension inlets (the latter represented in Figure 6) are of substantially similar design and structure to that of the first waste suspension inlet 2 found in both the first apparatus 1 and the second apparatus 29. The primary waste chamber 3 therefore now comprises a plurality of waste suspension inlets (2, 31 & 32), which may be selectively and releasably capped, to prevent fluid communication therethrough.

The primary extension chamber 30 comprises an extension chamber waste suspension inlet 33, that is in fluid communication with said primary extension chamber 29. Said extension chamber waste suspension inlet 33 is that of a typical waste inlet, such as a pipe, and facilitates the influx of a waste suspension into the primary extension chamber 29. The extension chamber waste suspension inlet 33 is adaptable so as to fit to a typical commercial waste outlet, such as those found in caravans.

The primary extension chamber 30 further comprises at least one fluid communication aperture (indicated generally at 34). Here, the primary extension chamber 30 comprises a first 35 and a second 36 fluid communication aperture (the latter represented in Figure 6), capable of receiving a first 37 and a second 38 fluid connection pipes (the latter represented in Figure 6). Said first 37 and second 38 fluid connection pipes are typically hollow cylindrical pipes, capable of facilitating fluid communication therethrough. Said first 37 and second 38 fluid connection pipes are resiliently sealable about their circumference within the first 35 and second 36 fluid communication apertures of the primary extension chamber 30. Said first 37 and second 38 fluid connection pipes are further resiliently sealable about their circumference within the second 31 and third 32 waste suspension inlets of the primary waste chamber 3. More particularly, the second 31 and third 32 waste suspension inlets comprise a rubber seal within their inner circumference, capable of forming a resilient seal around the first 37 and second 38 fluid connection pipes respectively. The structure of the first 35 and the second 36 fluid communication apertures are much the same, comprising a rubber seal within their inner circumference. In doing so, there is a water tight seal, thus facilitating fluid communication of the waste suspension within the primary extension chamber 30 to the primary waste chamber 3 through the first 37 and second 38 fluid connection pipes.

### Figure 6

Figure 6 provides additional clarity to the additional components of the second apparatus 29. As previously discussed, the apparatus 29 comprises second 31 and third 32 waste suspension inlets (within the primary waste chamber 3) and first 35 and second 36 fluid communication apertures (within the primary extension chamber 30), in fluid communication with each other by way of first 37 and second 38 fluid connection pipes.

A further attribute of the present invention (both in its first and second embodiments) is its portability. In this regard, through a particularly refined design and appropriate dimensions (approximately 2m length, 1m width and 0.5m depth) the apparatus (1 and 29) may be manually transported as opposed to requiring the assistance of machinery. Moreover, due to the relatively small dimensions of the apparatus (1 and 29) there is a significantly reduced burden for excavation of the ground in which it is to be installed, further reducing health and safety risks and obviating significant installation costs.

## Claims

1. A waste suspension treatment apparatus (1), comprising;
a primary waste chamber (3), provided with at least one waste suspension inlet means (2);
a first filter means (4), located within the primary waste chamber (3);
a waste treatment chamber (8), having first and second ends and containing at least one treatment medium (28);
a second filter means (15), located within the waste treatment chamber (8); and
at least one final waste suspension outlet means (17);
**characterised in that**
said first filter means (4) is adapted for separation of macroscopic waste products from a waste suspension and said second filter means (15) is adapted for removal filtration of finer suspended solids.

2. The waste suspension treatment apparatus of claim 1, wherein the primary waste chamber (3) is provided with a plurality of waste suspension inlet means (31).

3. The waste suspension treatment apparatus of claim 2, wherein at least one of the plurality of waste suspension inlet means (31) is selectably and reversibly sealable.

4. The waste suspension treatment apparatus of claim 3, wherein at least one of the plurality of waste suspension inlet means (31) is selectably and reversibly connectable to a primary extension chamber (30).

5. The waste suspension treatment apparatus of claim 4, wherein the primary extension chamber (30) is provided with extension chamber waste suspension inlet means (32), for influx of said waste suspension into said primary extension chamber.

6. The waste suspension treatment apparatus of claim 1, further comprising at least one air incorporation means (10) situated within the waste treatment chamber, for the incorporation of air into said waste suspension.

7. The waste suspension treatment apparatus of claim 6, wherein the air incorporation means (10) comprises a diffuser connected to an air compressor.

8. The waste suspension treatment apparatus of claim 7, wherein the diffuser (10) is elongate, comprising a first end and a second end, and extends an entire length of said waste treatment chamber (8).

9. The waste suspension treatment apparatus of claim 8, wherein the first end of the diffuser (10) is situated adjacent the first end of the waste treatment chamber (8) and the second end of the diffuser (10) is situated adjacent the second end of the waste treatment chamber (8).

10. The waste suspension treatment apparatus of any one of claim 7 to 9, comprising a plurality of air incorporation means (10), situated within the waste treatment chamber (8) and generally equally transversely spaced.

11. The waste suspension treatment apparatus of claim 1, further comprising a first baffle means (7) and a second baffle means (9), wherein the first baffle means (7) defines a first boundary between the primary waste chamber (3) and the waste treatment chamber (8), and the second baffle means (9) defines a second boundary between the waste treatment chamber (8) and a final waste chamber (12).

12. The waste suspension treatment apparatus of claim 11, further comprising waste circulation means (18), for the return of a sedimented waste suspension from the final waste chamber (12) to the primary waste chamber (3) for further processing.

13. The waste suspension treatment apparatus of claim 1, wherein the treatment medium (28) comprises a grooved or apertured surface with a surface area between 239m²/m³ and 859m²/m³.

14. The waste suspension treatment apparatus of claim 13, wherein the treatment medium (28) comprises plastics materials, such as High Density Polyethylene (HDPE).

15. A waste suspension treatment process comprising the steps of:
providing waste suspension treatment apparatus (1) as claimed in any one of the preceding claims;
receiving a waste suspension;
first filtration of said waste suspension, producing a filtered waste suspension;
biological treatment of said filtered waste suspension, producing a treated waste suspension;
second filtration of said treated waste suspension, producing a final waste suspension; and
ejecting said final waste suspension from the apparatus.
